# EUROPEAN PATENT APPLICATION

(11) **EP 4 553 266 A1**
(43) Date of publication of application: **14.05.2025**
(21) Application number: 23834479.0
(22) Date of filing: 27.04.2023
(51) Int. Cl.: E06B 3/663, E06B 3/673

(54) **INSULATING GLASS UNIT SPACER BAR FRAME AND METHOD FOR PRODUCING SAME**

(30) Priority: 05.07.2022 CN 202210782796
(71) Applicant: Shandong Natergy Energy Technology Co., Ltd., Zibo, Shandong 255088 (CN)
(72) Inventor: LI, Xianxin, Zibo, Shandong 255088 (CN); MA, Kang, Zibo, Shandong 255088 (CN); LI, Chunhai, Zibo, Shandong 255088 (CN)
(74) Representative: Isern Patentes y Marcas S.L.
(86) International application number: PCT/CN2023/091057
(87) International publication number: WO 2024/007701

(57) **Abstract**

The present disclosure discloses an insulating glass unit spacer bar frame and a method for producing same, which relates to the field of insulating glass units. The insulating glass unit spacer bar frame includes a sealed-filler-type spacer bar and an empty spacer bar. The sealed-filler-type spacer bar has a hollow accommodating cavity filled with desiccants. The sealed-filler-type spacer bar has opposite first and second ends, both of which are in a sealed state and have an insertion structure. The empty spacer bar has opposite third and fourth ends, both of which are in an open state. The first end is inserted into the third end, and the second end is inserted into the fourth end, so that a spacer bar frame is formed through bending. The present application can effectively reduce production costs and improve production efficiency.

## Description

### Related application

The present disclosure claims priority to Chinese Invention Patent Application No. 202210782796.5, entitled "INSULATING GLASS UNIT SPACER BAR FRAME AND METHOD FOR PRODUCING SAME".

### Technical Field

The present disclosure relates to the field of insulating glass units, and in particular to an insulating glass unit spacer bar frame and a method for producing same.

### Background

An insulating glass unit is a glass product in which two or more pieces of glass are effectively and uniformly supported and separated by spacer bars, and sealed by bonding around the perimeter to create a space filled with dry gas between adjacent pieces of glass. The isulating glass offer several advantages, including excellent thermal and acoustic insulation, an attractive and practical appearance, and the ability to reduce the weight and energy consumption of buildings. As global requirements for energy conservation and emission reduction increase, the use of insulating glass units in energy-saving buildings is becoming increasingly widespread. The spacer bar is the core component of the insulating glass unit. The spacer bar ensures a fixed and appropriate distance between two or more layers of the insulating glass unit, and ensures that the gas within this distance remains dry to achieve the thermal insulation effect of the insulating glass unit.

The spacer bar of the insulating glass unit is generally packaged in a full box in the form of strips, with a normal length of generally 5 meters per strip. Upon unpacking, the spacer bar cannot be directly used on the insulating glass unit and requires to be processed through several procedures before it can be used. At present, the main processing method for the spacer bar of the insulating glass unit include: cutting and bending the spacer bar at first, calculating the circumference of the insulating glass unit, cutting the spacer bar if the circumference is less than the length of a single spacer bar, and connecting the spacer bar to a segment of spacer bar through a connector if the circumference is greater than the length of the single spacer bar to meet the circumference requirements. Due to the varying specifications of the circumference of the insulating glass unit, it is difficult to achieve an exact match between the leftover pieces from cutting and the insulating glass unit, and the leftover pieces usually need to be connected by connectors before they are used, which will lead to an increase in the number of leakage points and a reduction in the sealing performance of the connected insulating glass unit, or lead to many excessively long spacer bars being discarded to avoid increasing leakage points. This method is accomplished mainly manually with the help of auxiliary equipment, which has a significant impact on the stability of connection. There are mainly two types of connectors based on their materials: plastic connectors and steel connectors. The plastic connectors are not resistant to aging and may soften at high temperature; and the steel connectors are difficult to connect and have a high cost. Secondly, after the spacer bar is made into a frame molecular sieve is filled by utilizing a filling machine which drills holes on the back of the spacer bar to inject the molecular sieve, then the filled holes are sealed with glue, and then the spacer bar is coated with glue to complete the filling and is installed on the insulating glass unit. The molecular sieve has a strong ability to absorb moisture. There may be a long time between the injection of the molecular sieve into the spacer bar and the actual installation of the spacer bar with the glass to be made into the finished insulating glass unit product, which inevitably leads to exposure of the molecular sieve to air, causing it to adsorb moisture in the air. As a result, the adsorption capacity of the molecular sieve decreases, and in severe cases, molecular sieve may fail, directly affecting the lifespan of the insulating glass unit. When the connector is inserted inside the spacer bar, the fluidity of the molecular sieve inside the spacer bar may also be affected, reducing the filling efficiency of the molecular sieve. The filling process is difficult to implement automatically due to the variety of specifications of the insulating glass unit, and currently requires both manual labor and auxiliary equipment, resulting in unstable quality and high labor intensity.

### Summary

In order to overcome the above defects of the prior art, the technical problem to be solved by the embodiment of the present disclosure is to provide an insulating glass unit spacer bar frame and a method for producing same, which can effectively reduce production costs and improve the production efficiency.

In order to achieve the above object, the technical solution adopted by the present disclosure is as follows:
The present disclosure discloses an insulating glass unit spacer bar frame, including a sealed-filler-type spacer bar and an empty spacer bar. The sealed-filler-type spacer bar has a hollow accommodating cavity filled with desiccants. The sealed-filler-type spacer bar has opposite first and second ends, both of which are in a sealed state and have an insertion-connection structure. The empty spacer bar has opposite third and fourth ends, both of which are in an open state. The first end is inserted into the third end, and the second end is inserted into the fourth end, so that a spacer bar frame is formed through bending.

The present disclosure further discloses a method for producing an insulating glass unit spacer bar frame, including:
calculating, based on a specification of the insulating glass unit that needs to be processed and manufactured and a distance between the spacer bar frame and an edge of the insulating glass unit, to obtain an initially set total circumference L of the spacer bar frame;
obtaining a feasible length range of a sealed-filler-type spacer bar based on the initially set total circumference L of the spacer bar frame and a minimum percentage a of the sealed-filler-type spacer bar in the spacer bar frame;
determining a fixed length specification e of the sealed-filler-type spacer bar according to the feasible length range of the sealed-filler-type spacer bar and an inventory status of the sealed-filler-type spacer bar;
obtaining a feasible length range of the empty spacer bar based on the initially set total circumference L of the spacer bar frame, an insertion size d of an insertion port between the sealed-filler-type spacer bar and the empty spacer bar, and the fixed length specification e of the sealed-filler-type spacer bar;
determining a fixed length specification of the empty spacer bar according to the feasible length range of the empty spacer bar and an inventory status of the empty spacer bar; and
checking a total circumference of the spacer bar frame formed by the fixed length specification of the sealed-filler-type spacer bar and the fixed length specification of the empty spacer bar, to determine whether it is greater than or equal to a value obtained by subtracting a free adjustment value c from the initially set total circumference L of the spacer bar frame, and less than or equal to a value obtained by adding free adjustment value c to the initially set total circumference L of the spacer bar frame; if the checking is not passed, adjusting the distance between the spacer bar frame and the edge of the insulating glass unit to determine a new initially set total circumference L of the spacer bar frame or to re-determine the fixed length specification of the empty spacer bar.

Compared with the prior art, the present disclosure has the following beneficial effects:
1. In the present application, by analyzing the specification of the to-be-processed insulating glass unit, it is possible to obtain the fixed length specification of the sealed-filler-type spacer bar filled with desiccants and the fixed length specification of the empty spacer bar not filled with desiccant, so as to obtain the optimal assembly scheme. The sealed-filler-type spacer bar and/or the empty spacer bar are bent and then inserted with each other to form the spacer bar frame. The whole process is convenient and flexible, and can effectively make full use of the cut-off remnants of the empty spacer bar 200, or minimize the unused part of the whole empty spacer bar after cutting or do not produce leftovers, thus saving production costs and eliminating the inserting connectors used in the traditional process, which can also reduce production costs and reduce labor intensity.
2. The present application has the characteristics of high flexibility, making it applicable to the processing of the insulating glass unit with many dimensions and specifications. The sealed-filler-type spacer bar come pre-filled with sealing desiccants, eliminating the process of filling the desiccants during the formation of the insulating glass unit, avoiding the pollution of desiccant dust on the glass, reducing the exposure time of the desiccants to the air before the insulating glass unit is assembled, and effectively improving the processing quality and service life of the insulating glass unit.
3. In the present application, both the sealed-filler-type spacer bar and the empty space bar can be manufactured through automated production processes, and the insertion connection between the two to form the spacer bar frame can also be completed directly by automated machinery, eliminating the need for manual intervention, which not only frees workers from high-intensity and repetitive tasks but also significantly enhances production efficiency and product quality.

Specific embodiment of the present disclosure is disclosed in detail with reference to the following description and the accompanying drawings, indicating the manner in which the principles of the present disclosure may be employed. It should be understood that the embodiment of the present disclosure is not thus limited in scope. The features described and/or shown for one embodiment can be used in one or more other embodiments in the same or similar manner, can be combined with the features in other embodiments or replace the features in other embodiments.

### Brief description of the drawings

FIG. 1 is a structural schematic diagram of an insulating glass unit spacer bar frame according to a first embodiment of the present disclosure;
FIG. 2 is a structural schematic diagram of an insulating glass unit spacer bar frame according to a second embodiment of the present disclosure;
FIG. 3 is a structural schematic diagram of a sealed-filler-type spacer bar in the first embodiment of the present disclosure;
FIG. 4 is a schematic diagram illustrating insertion connection between the sealed-filler-type spacer bar and the empty spacer bar in the first embodiment of the present disclosure;
FIG. 5 is a stereoscopic structural schematic diagram of the sealed-filler-type spacer bar in the second embodiment of the present disclosure;
FIG. 6 is a partially exploded diagram of the sealed-filler-type spacer bar and the empty spacer bar in the second embodiment of the present disclosure;
FIG. 7 is a partial schematic diagram illustrating insertion connection between the sealed-filler-type spacer bar and an end portion of the empty spacer bar in the second embodiment of the present disclosure;
FIG. 8 is a partial perspective schematic diagram illustrating insertion connection between the sealed-filler-type spacer bar and an end portion of the empty spacer bar in the second embodiment of the present disclosure;
FIG. 9 is a flowchart of steps of a method for producing an insulating glass unit spacer bar frame according to embodiments of the present disclosure; and
FIG. 10 is a schematic diagram illustrating a relationship between the total circumference L of the spacer bar frame and the glass according to embodiments of the present disclosure.
11. first sidewall; 111. first groove; 112. first guide portion; 12. second sidewall; 121. second groove; 122. second guide portion; 13. third sidewall; 14. fourth sidewall; 15. sheet-like structure; 16. tapered section; 17. first bending portion; 18. second bending portion; 19. stepped portion; 100. sealed-filler-type spacer bar; 1001. hole; 1002. insertion-connection structure; 1003. desiccant; 200. empty spacer bar.

### Detailed description

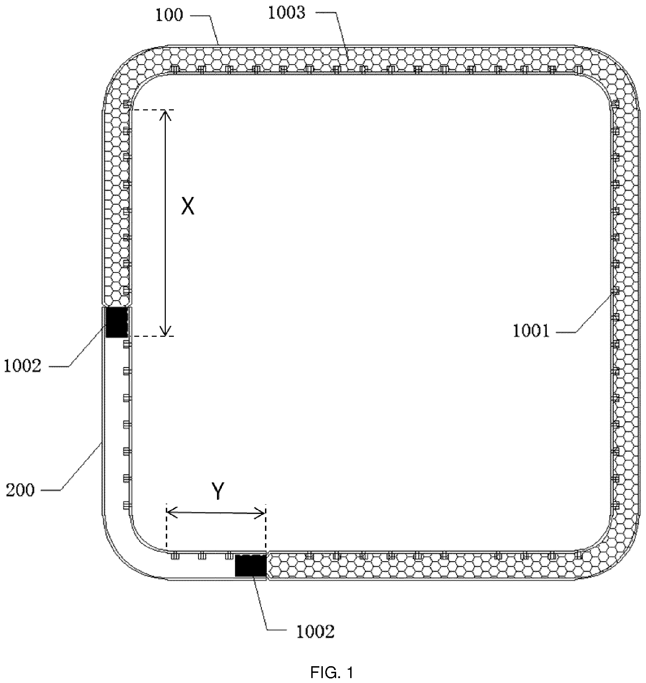

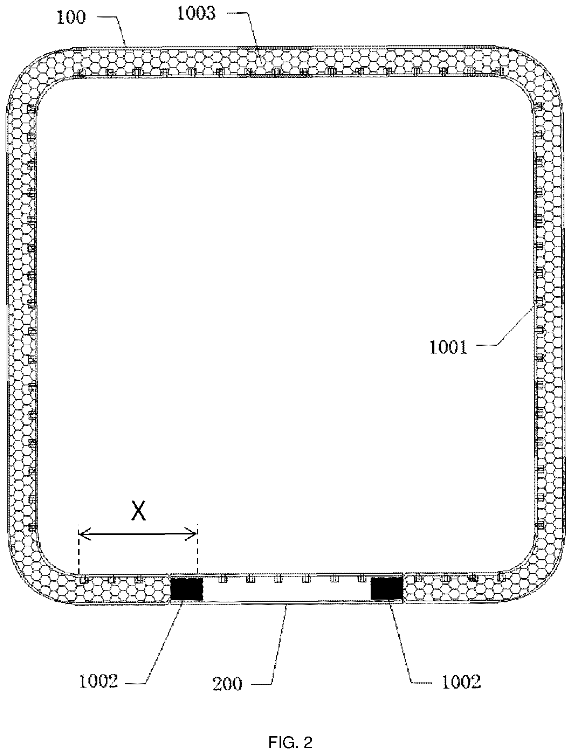

In order to further elaborate the technical means and effects of the present disclosure for achieving the intended purpose of the present disclosure, hereinafter with reference to the attached drawings and better embodiments, the specific embodiments, structure, features and effects based on the present disclosure are described in detail as follows:
In order to effectively reduce production costs and improve the production efficiency, the present disclosure provides an insulating glass unit spacer bar frame and a method for producing same. In the drawings, FIG. 1 is a structural schematic diagram of an insulating glass unit spacer bar frame according to a first embodiment of the present disclosure, and FIG. 2 is a structural schematic diagram of an insulating glass unit spacer bar frame according to a second embodiment of the present disclosure. As shown in FIG. 1 and FIG. 2, the insulating glass unit spacer bar frame may include a sealed-filler-type spacer bar 100 and an empty spacer bar 200. The sealed-filler-type spacer bar 100 has a hollow accommodating cavity therein, and the accommodating cavity is filled with desiccants 1003. The sealed-filler-type spacer bar 100 has opposite first and second ends, and the first and second ends of the sealed-filler-type spacer bar 100 are in a sealed state and each have an insertion-connection structure 1002. The empty spacer bar 200 has opposite third and fourth ends, and the third and fourth ends of the empty spacer bar 200 are in an open state. The first end is inserted into the third end, and the second end is inserted into the fourth end, so that a spacer bar frame is formed through bending.

As shown in FIG. 1, the sealed-filler-type spacer bar 100 may be bent multiple times, the empty spacer bar 200 may be bent at least once, and the bent sealed-filler-type spacer bar 100 is in insertion connection with the bent empty spacer bar 200. That is, the insertion-connection structure 1002 at the first end of the sealed-filler-type spacer bar 100 is inserted into the third end of the empty spacer bar 200, and the insertion-connection structure 1002 at the second end of the sealed-filler-type spacer bar 100 is inserted into the fourth end of the empty spacer bar 200, thereby being bent to form the spacer bar frame. Generally speaking, the space bar frame is rectangular or square. Of course, in other special cases, the spacer bar frame may also be arbitrarily polygonal, irregular graphs with circular arc, etc., which is not limited in the present application.

As shown in FIG. 2, the sealed-filler-type spacer bar 100 may be bent multiple times, the empty spacer bar 200 may be rectilinear without being bent, and the bent sealed-filler-type spacer bar 100 is in insertion connection with the rectilinear empty spacer bar 200.

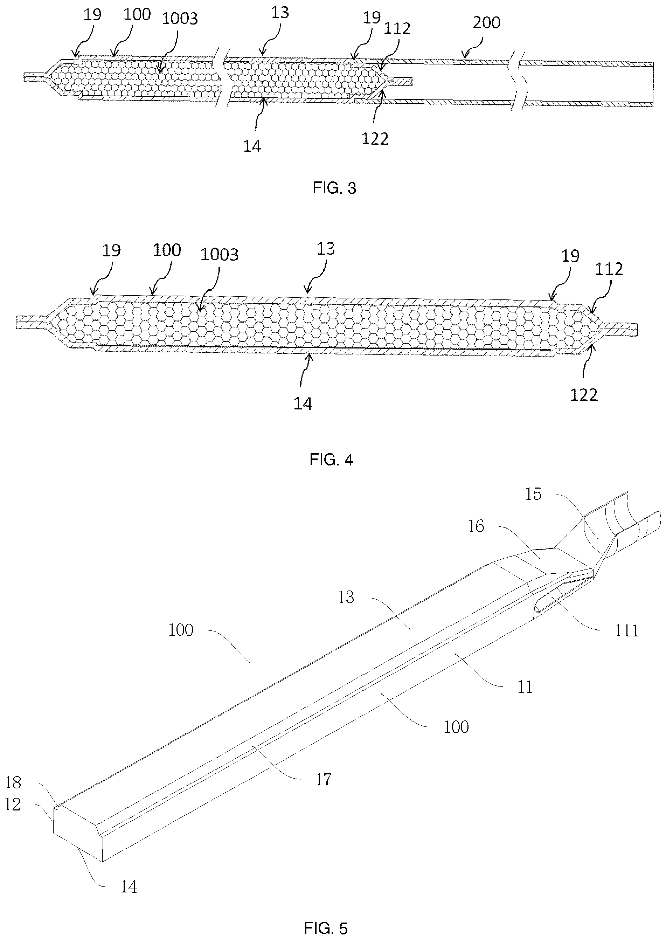

In a feasible embodiment, FIG. 3 is a structural schematic diagram of a sealed-filler-type spacer bar in the first embodiment of the present disclosure, and FIG. 4 is a schematic diagram illustrating insertion connection between the sealed-filler-type spacer bar and the empty spacer bar in the first embodiment of the present disclosure. As shown in FIG. 3 and FIG. 4, the first end and the second end of the sealed-filler-type spacer bar 100 are in a sealed state, the sealed-filler-type spacer bar 100 has a hollow accommodating cavity therein, and the accommodating cavity is filled with desiccants 1003. End portions of the first and second ends of the sealed-filler-type spacer bar 100 are each provided with a stepped portion 19 in the circumferential direction. The empty spacer bar 200 has a hollow accommodating cavity therein, and the third end of the fourth end of the empty spacer bar 200 are in an open state, such that the openings of the end portions of the empty spacer bar 200 can be in insertion connection with the end portion of the sealed-filler-type spacer bar 100, and the end portion of the empty spacer bar 200 abuts against the stepped portion 19 of the sealed-filler-type spacer bar 100.

As shown in FIG. 3 and FIG. 4, the sealed-filler-type spacer bar 100 may be in a long strip shape or any other shape with a bent structure to adapt to the shape of the insulating glass unit. The sealed-filler-type spacer bar 100 may be tubular, i.e., the sealed-filler-type spacer bar 100 has a hollow accommodating cavity therein. The accommodating cavity is filled with desiccants 1003. The desiccants 1003 are used to absorb moisture in the closed annular area enclosed by the spacer bar, thereby keeping the annular area to be dry and thus improving thermal insulation.

In order to seal the desiccants 1003 in the accommodating cavity to prevent it from leaking and to prevent it from absorbing moisture in the outside air through the end portions of the sealed-filler-type spacer bar 100, both ends of the sealed-filler-type spacer bar 100 need to be in a sealed state, as shown in FIG. 3 and FIG. 4. Generally speaking, the cross section of the sealed-filler-type spacer bar 100 may be substantially rectangular, and correspondingly, the cross section of the empty spacer bar 200 may also be substantially rectangular, in this way, both the sealed-filler-type spacer bar 100 and the empty spacer bar 200 have at least two opposing and parallel surfaces, so that the two surfaces can be tightly attached to adjacent pieces of glass, respectively, thereby realizing a seal between the spacer bar and the glass.

As shown in FIG. 3 and FIG. 4, the end portions of the two ends of the sealed-filler-type spacer bar 100 are each provided with a stepped portion 19 in the circumferential direction. The stepped portion 19 is located at the circumference of the end portion of the sealed-filler-type spacer bar 100, so that the dimension of the end portion of the sealed-filler-type spacer bar 100 in the radial direction is reduced. The empty spacer bar 200 has a hollow accommodating cavity therein, and the two ends of the empty spacer bar 200 are in an open state. The profile for making the empty spacer bar 200 is the same as that for making the sealed-filler-type spacer bar 100. That is, at the non-end portion, the cross section of the sealed-filler-type spacer bar 100 in the radial direction is the same as that of the empty spacer bar 200 in the radial direction. The empty spacer bar 200 may also be in a long strip shape or any other shape with a bent structure to adapt to the shape of the insulating glass unit. Similar to the sealed-filler-type spacer bar 100, the empty spacer bar 200 may also be tubular. In this way, the opening of the end portion of the empty spacer bar 200 can be in insertion connection with the end portion of the sealed-filler-type spacer bar 100, and the end portion of the empty spacer bar 200 can abut against the stepped portion 19 of the sealed-filler-type spacer bar 100.

Further, as shown in FIG. 3 and FIG. 4, the stepped portion 19 at the end portion of the sealed-filler-type spacer bar 100 is reduced in the radial direction by a distance equal to the wall thickness of the empty spacer bar 200. In this way, the sealed-filler-type spacer bar 100, which has a reduced radial dimension, can clamp the inner side surface of the end portion of the empty spacer bar 200, thereby further improving the firmness of the insertion between the two. Secondly, the outer side surface of the sealed-filler-type spacer bar 100 and the outer side surface of the empty spacer bar 200 can remain flush and aligned in a straight line, which significantly improve the aesthetic appearance of the two that are in insertion connection.

Further, as shown in FIG. 3 and FIG. 4, the sealed-filler-type spacer bar 100 has a third sidewall 13 and a fourth sidewall 14 that are opposite to each other. At the end portion of the sealed-filler-type spacer bar 100, the third sidewall 13 has a first guide portion 112 tilted toward the center of the sealed-filler-type spacer bar 100, and the fourth sidewall 14 has a second guide portion 122 tilted toward the center of the sealed-filler-type spacer bar 100. The third sidewall 13 and the fourth sidewall 14 are sidewalls that do not tightly adhere to the glass when forming the insulating glass unit. The presence of the first guide portion 112 and the second guide portion 122 makes it easy to insert the end portion of the sealed-filler-type spacer bar 100 into the empty spacer bar 200. The guide structure of the sealed-filler-type spacer bar 100 may be formed by being mechanically extruded or pressed.

As shown in FIG. 3 and FIG. 4, the end portion of the first guide portion 112 abuts against the end portion of the second guide portion 122 for sealing. Specifically, the end portion of the first guide portion 112 that is away from the stepped portion 19 and the end portion of the second guide portion 122 that is away from the stepped portion 19 gradually abut together to seal the end portions. The parts that abut together then extend parallel to each other for a distance. The parallel parts can be tightly welded or sealed together with sealing materials to further improve the sealing performance and avoid local leakage.

Feasibly, as shown in FIG. 3 and FIG. 4, the sidewall of the sealed-filler-type spacer bar 100 in the insulating glass unit spacer bar frame may not be provided with a hole 1001 before it is processed into the insulating glass unit. For a traditional trough-aluminum-type insulating glass unit spacer bar, when processing the insulating glass unit, the desiccants 1003 need to be filled into the trough-aluminum-type insulating glass unit spacer bar at the production site of the insulating glass unit. As a result, in the process of filling the desiccants 1003, the broken powder of the desiccants 1003 is prone to leak and contaminate the glass, the desiccants 1003 are exposed to the air for a long time before the glass is assembled, and the desiccants 1003 absorb water, which may greatly reduce the drying effect. In the present application, the sealed-filler-type spacer bar 100 in the insulating glass unit spacer bar frame is directly pre-filled with the desiccants 1003 and sealed, and no hole 1001 is provided on the sidewall of the sealed-filler-type spacer bar 100, that is, no adsorption hole is provided, so as to solve the problem that the drying effect is reduced because the desiccants 1003 absorb moisture from the outside air when the sealed-filler-type spacer bar 100 is not installed into the insulating glass unit. When the sealed-filler-type spacer bar 100 in the present application is installed into the insulating glass unit, holes 1001 are directly provided on the sidewall of the sealed-filler-type spacer bar 100 using a punching device. The current punching device is becoming increasingly advanced, for example, the holes 1001 may be formed directly and efficiently on the sidewall of the sealed-filler-type spacer bar 100 at the installation site of the spacer bar and the insulating glass unit using a laser punching device. According to the specific requirements, the holes 1001 are generally opened in a side of the spacer bar facing an enclosed area formed by the spacer bar in the insulating glass unit, and the installation efficiency can be greatly improved by laser punching. Of course, the holes 1001 may also be processed and formed by stamping or piercing.

In the present application, the insulating glass unit spacer bar frame includes a sealed-filler-type spacer bar 100 and an empty spacer bar 200. The end portion of the sealed-filler-type spacer bar 100 has a stepped portion 19, so that it can be inserted into the end portion of the empty spacer bar 200 that is in an open state. The end portion of the empty spacer bar 200 abuts against the stepped portion 19 of the sealed-filler-type spacer bar 100, so that the opening of the end portion of the empty spacer bar 200 can be in insertion connection with the end portion of the sealed-filler-type spacer bar 100. In this way, the spacer bars in the insulating glass unit can form a closed ring by themselves without the use of other spare parts, thus ensuring that the gas in the ring remains dry.

The sealed-filler-type spacer bar 100 in the above embodiments does not need to be cut during use, and a single sealed-filler-type spacer bar 100 can be continuously bent into a frame, and then inserted and connected directly with the empty spacer bar 200, so as to form a closed insulating glass unit spacer bar frame. The empty spacer bar 200 can be cut at arbitrary length, and thus the length of the insulating glass unit spacer bar frame can meet various needs. The present disclosure has a simple process, eliminates the use of inserting connectors, reduces costs, and improves product quality and production efficiency. The sealed-filler-type spacer bar 100 has the advantages of high reliability, environmental protection and cleanliness, and being convenient for the processing of the insulating glass unit. The sealed-filler-type spacer bar 100 has no prefabricated hole 1001 in mass production in the factory, so that it is possible to avoid the desiccants 1003 from being exposed to air for water absorption, and eliminate the need for additional sealed packaging, and the structure is more simple and reliable.

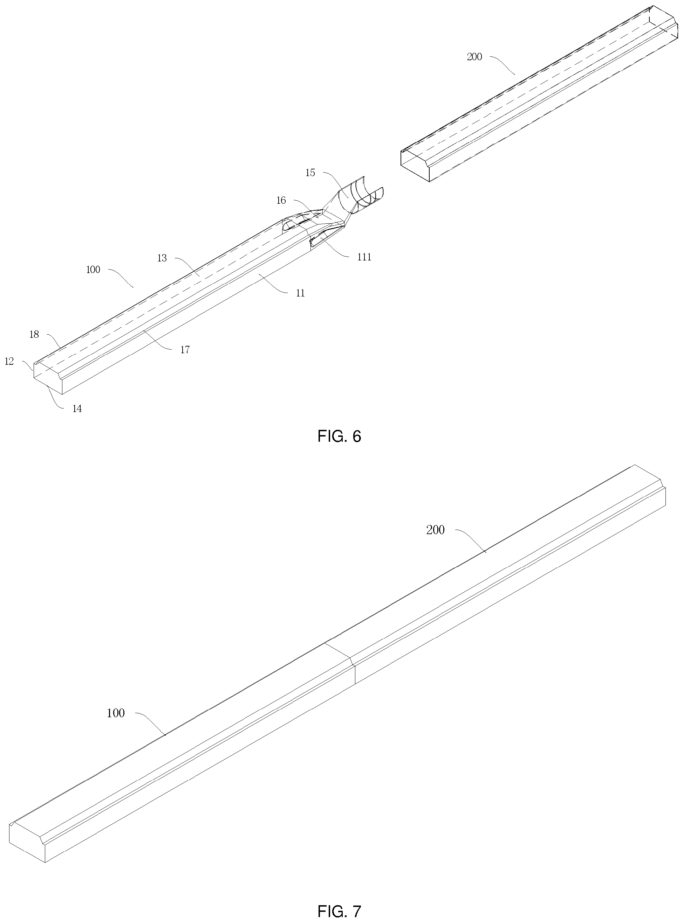

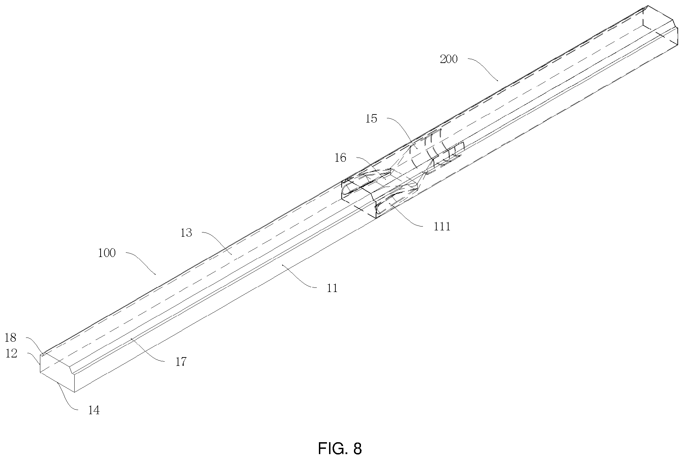

In another feasible embodiment, FIG. 5 is a stereoscopic structural schematic diagram of the sealed-filler-type spacer bar in the second embodiment of the present disclosure, FIG. 6 is a partially exploded diagram of the sealed-filler-type spacer bar and the empty spacer bar in the second embodiment of the present disclosure, FIG. 7 is a partial schematic diagram illustrating insertion connection between the sealed-filler-type spacer bar and the end portion of the empty spacer bar in the second embodiment of the present disclosure, and FIG. 8 is a partial perspective schematic diagram illustrating insertion connection between the sealed-filler-type spacer bar and the empty spacer bar in the second embodiment of the present disclosure. As shown in FIGs. 5 to 8, the insertion-connection structures 1002 of the first and second ends of the sealed-filler-type spacer bar 100 may include a body having an axis, and having a first sidewall 11 and a second sidewall 12 that are opposite to each other and a third sidewall 13 and a fourth sidewall 14 that are opposite to each other. The first sidewall 11, the second sidewall 12, the third sidewall 13 and the fourth sidewall 14 enclose an accommodating cavity. At at least one end portion of the body, the third sidewall 13 and the fourth sidewall 14 are pressed in a direction perpendicular to the third sidewall 13 to form a sheet-like structure 15. Both ends of the sheet-like structure, which are aligned with the first and second sidewalls, are curled around the axis respectively to form a curved shape.

As shown in FIG. 5, the body can be made of metal materials, such as aluminum, copper or the like with high toughness. The body may at least include a first sidewall 11 and a second sidewall 12 that are opposite to each other, and a third sidewall 13 and a fourth sidewall 14 that are opposite to each other. The first sidewall 11, the second sidewall 12, the third sidewall 13 and the fourth sidewall 14 form an accommodating cavity. When the insulating glass unit spacer bar is arranged in the insulating glass unit, the first sidewall 11 and the second sidewall 12 respectively adhere tightly to the side surfaces of adjacent pieces of glass in the insulating glass unit.

As shown in FIG. 5, the first sidewall 11 and the second sidewall 12 may be planar, so that they can better adhere to the side surfaces of adjacent pieces of glass in the insulating glass unit, so as to form a sealed state. The third sidewall 13 and the fourth sidewall 14 may be planar, may also be slightly curved arc, or may also be a wavy curved surface, etc. The third sidewall 13 and the fourth sidewall 14 only need to be bent slightly, which is not limited in the present application.

As shown in FIG. 5, the upper ends of the first sidewall 11 and the second sidewall 12 are connected to the third sidewall 13, and the lower ends of the first sidewall 11 and the second sidewall 12 are connected to the fourth sidewall 14, so as to form an accommodating cavity.

Feasibly, there may be a first bending portion 17 concave towards the accommodating cavity at the connection position between the first sidewall 11 and the third sidewall 13, that is, there may be a first bending portion 17 concave towards the accommodating cavity at the corner of the body, and the existence of the first bending portion 17 can effectively improve the strength of the whole body. The first bending portion 17 may include a first folded edge and a second folded edge, the first folded edge may be parallel to the fourth sidewall 14, and the first folded edge is connected to the upper edge of the first sidewall 11. The second folded edge and the first sidewall 11 form a certain included angle, and is connected to the first folded edge and the third sidewall 13 respectively.

Feasibly, as shown in FIG. 5, there may be a second bending portion 18 concave towards the accommodating cavity at the connection position between the second sidewall 12 and the third sidewall 13, that is, there may be a second bending portion 18 concave towards the accommodating cavity at the corner of the body, and the existence of the second bending portion 18 can effectively improve the strength of the whole body. The second bending portion 18 may include a third folded edge and a fourth folded edge, the third folded edge may be parallel to the fourth sidewall 14, and the third folded edge is connected to the upper edge of the second sidewall 12. The fourth folded edge and the second sidewall 12 form a certain included angle, and is connected to the third folded edge and the third sidewall 13 respectively.

As shown in FIG. 5, the structure at the whole non-end portion of the body may be the same as the cross section of the current conventional spacer bar. Therefore, the sealed-filler-type spacer bar 100 in the present application may be formed by directly processing the current conventional spacer bar.

As shown in FIG. 5, at at least one end portion of the body, the third sidewall 13 and the fourth sidewall 14 are pressed in a direction perpendicular to the third sidewall 13 to form a sheet-like structure 15. In this structure, the third sidewall 13 and the fourth sidewall 14 are pressed by being squeezed mechanically to form the sheet-like structure 15. For example, the third sidewall 13 may be squeezed obliquely towards the fourth sidewall 14, with the fourth sidewall 14 remaining substantially immobile, and as a result, the third sidewall 13 and the fourth sidewall 14 are adhered together to form the sheet-like structure 15; alternatively, the third sidewall 13 may be squeezed obliquely towards the fourth sidewall 14, and the fourth sidewall 14 may also be squeezed obliquely towards the third sidewall 13, such that the third sidewall 13 is adhered to the fourth sidewall 14 to form the sheet-like structure 15 at a position lower than the height of the third sidewall 13 at the non-end portion and higher than the height of the fourth sidewall 14 at the non-end portion, so that there is no need to adjust the position of the sheet-like structure 15 in the height direction in the later period for ensuring the smoothness of the sidewall when it is inserted into other spacer bars. Feasibly, the third sidewall 13 is adhered to the fourth sidewall 14 to form the sheet-like structure 15 at a position much lower than the height of the third sidewall 13 at the non-end portion and slightly higher than the height of the fourth sidewall 14 at the non-end portion, so as to facilitate the curling of the sheet-like structure 15 in the later period. The sheet-like structure 15 curled into a curved shape can be inserted into other spacer bars.

In the process of forming the sheet-like structure 15 as described above, the first sidewall 11 is bent outwards symmetrically about its longitudinal center line, so that an inner side surface of a portion of the first sidewall 11 below the longitudinal center line is tightly adhered with an inner side surface of a portion of the first sidewall 11 above the longitudinal center line; and the second sidewall 12 is bent outwards symmetrically about its longitudinal center line, so that an inner side surface of a portion of the second sidewall 12 below the longitudinal center line is tightly adhered with an inner side surface of a portion of the second sidewall 12 above the longitudinal center line. Through the above process, the first sidewall 11 and the second sidewall 12 can also be pressed together into a sheet-like structure 15 without increasing the thickness of the sheet-like structure 15, which is beneficial for the later curling of the two ends of the sheet-like structure 15 around the axis into a curved shape. Of course, since the first sidewall 11 and the second sidewall 12 are bent correspondingly, the width of the sheet-like structure 15 can also be increased. However, by curling the two ends of the sheet-like structure 15 in the direction of the first sidewall 11 and the second sidewall 12 respectively around the axis into the curved shape, the width of the sheet-like structure 15 can be reduced, so that the sheet-like structure 15 can be inserted into other spacer bars.

Feasibly, the sheet-like structure 15 may be in a sealed state, so that one end of the body that has the sheet-like structure 15 is sealed. In a specific embodiment, the end face of the sheet-like structure 15 can be welded so as to be sealed. That is, the end faces of the third sidewall 13 and the fourth sidewall 14 are welded, the end face of the first sidewall 11 after being bent is welded, and the end face of the second sidewall 12 after being bent is welded, so as to achieve a complete seal of the end face of the sheet-like structure 15. It can also be understood that the flattened part of the sheet-like structure 15 can be sealed by welding, i.e., the bent first sidewall 11, the bent second sidewall 12, the third sidewall 13, and the fourth sidewall 14 are flattened to form a sheet-like structure 15 with tightly adhered inner surfaces, and the sheet-like structure 15 is completely sealed by welding the flattened part. In another specific embodiment, the inner surface of sheet-like structure 15 is provided with an adhesive, so that one end of the body that has the sheet-like structure 15 is sealed. After the first sidewall 11, the second sidewall 12, the third sidewall 13, and the fourth sidewall 14 are pressed into the sheet-like structure 15, the adhesive can bond the inner surfaces of the third sidewall 13 with the fourth sidewall 14, bond the inner sidewall of the bent first sidewall 11, and bond the inner sidewall of the bent second sidewall 12, so as to achieve a complete seal of the end face of the sheet-like structure 15. The sealing of the end portion of the insulating glass unit spacer bar can be achieved through the above method. If the accommodating cavity in the insulating glass unit spacer bar is filled with desiccants 1003, the sealing degree of the desiccants 1003 can be ensured, to preventing them from getting damp or scattering out when not in use.

As shown in FIG. 5, by curling the two ends of the sheet-like structure 15 in the direction of the first sidewall 11 and the second sidewall 12 respectively around the axis into the curved shape, the end portion of the insulating glass unit spacer bar can be inserted into other spacer bars. Feasibly, the two ends of the sheet-like structure 15 in the direction of the first sidewall 11 and the second sidewall 12 are curled respectively around the axis into the curved shape at a degree which needs to meet the following conditions: if the third sidewall 13 and the fourth sidewall 14 are in a parallel state at the non-end portion, then a maximum height of the contour of the curved sheet-like structure 15 in a direction perpendicular to the third sidewall 13 is smaller than a distance between an inner side surface of the third sidewall 13 and an inner side surface of the fourth sidewall 14 of the body at the non-end portion; and if the first sidewall 11 and the second sidewall 12 are in a parallel state at the non-end portion, then a maximum width of the contour of the curved sheet-like structure 15 in a direction perpendicular to the first sidewall 11 is smaller than a distance between an inner side surface of the first sidewall 11 and an inner side surface of the second sidewall 12 of the body at the non-end portion.

As shown in FIG. 5, feasibly, the body has a tapered section 16 close to the sheet-like structure 15, and the tapered section 16 is located between the sheet-like structure 15 and the body that has a normal thickness without being pressed. At the tapered section 16, the third sidewall 13 is gradually tilted towards the fourth sidewall 14 until the third sidewall 13 abuts against the fourth sidewall 14 to form an abutting portion that is a straight line perpendicular to the third sidewall 13. The body that has a normal thickness without being pressed is transitioned to the sheet-like structure 15 through the tapered section 16.

As shown in FIG. 5, feasibly, at the tapered section 16, the first sidewall 11 is recessed into the accommodating cavity of the body to form a first groove 111, the first groove 111 extends along the axis and extends to the abutting portion. Similarly, at the tapered section 16, the second sidewall 12 is recessed into the accommodating cavity of the body to form a second groove 121, the second groove 121 extends along the axis and extends to the abutting portion. Since the third sidewall 13 is gradually tilted towards the fourth sidewall 14 until the third sidewall 13 abuts against the fourth sidewall 14, the heights of the first sidewall 11 and the second sidewall 12 in the vertical direction also gradually decrease. By providing the first groove 111 and the second groove 121, the first groove 111 and the second groove 121 recessed into the accommodating cavity can accommodate the excess portions of the first sidewall 11 and the second sidewall 12 which have reduced thickness. In this way, at the tapered section 16, the first sidewall 11 and the second sidewall 12 will not extend and protrude outwards due to the squeezing caused by the third sidewall 13 being gradually tilted towards the fourth sidewall 14, thereby avoiding an increase in the size of the body in the direction perpendicular to the first sidewall 11 to ensure that the body can be inserted into other spacer bars.

Further, as shown in FIG. 1, a distance between two opposite sidewalls of the first groove 111 gradually decreases in a direction towards the abutting portion until they come into contact. A distance between two opposite sidewalls of the second groove 121 gradually decreases in the direction toward the abutting portion until they come into contact. By this way, it is ensured that at the entire tapered section 16, the area from the first sidewall 11 and the second sidewall 12 all the way to the sheet-like structure 15 may not excessively extend and protrude outwards due to the squeezing caused by the third sidewall 13 being gradually tilted towards the fourth sidewall 14, and at the sheet-like structure 15, the two ends of the sheet-like structure 15 in the direction of the first sidewall 11 and the second sidewall 12 are curled respectively around the axis into the curved shape to reduce the size in the direction perpendicular to the first sidewall 11.

Due to the presence of the tapered section 16, after the insulating glass unit spacer bar is inserted into another spacer bar, the outer sidewall of the tapered section 16 can be clamped with the inner sidewall of the end portion of the another spacer bar, so that the two spacer bars can be connected together and are not easy to separate.

As shown in FIGs. 6 to 8, the end portion of the sealed-filler-type spacer bar 100 that has the sheet-like structure 15 can be inserted into the end portion of the empty spacer bar 200. Further, the cross section of the empty spacer bar 200 in the radial direction may be the same as that of the sealed-filler-type spacer bar 100 in the radial direction at the non-end portion. In this way, when the end portion of the sealed-filler-type spacer bar 100 that has the sheet-like structure 15 is inserted into the end portion of the empty spacer bar 200, each sidewall of the sealed-filler-type spacer bar 100 and each corresponding sidewall of the empty spacer bar 200 can be located on the same plane, which can not only ensure that the entire spacer bar frame can be attached to the glass unit after the spacer bar frame is installed in the insulating glass unit to ensure the sealing performance, but also improves the beautiful appearance of the spacer bar frame. In the production process of the sealed-filler-type spacer bar 100 in the present application, the desiccants 1003 may be first filled and then the sheet-like structure 15 may be processed and formed at the end portion, and no holes are opened on the sidewall of the body 1 during the production process. After the entire spacer bar frame is installed into the insulating glass unit, holes are opened on the sidewall of the body to avoid the desiccants 1003 in the insulating glass unit spacer bar from being exposed to the air for a long time, so as to avoid a decrease in adsorption capacity.

In the above embodiments, the sealed-filler-type spacer bar 100 may be formed directly by flattening the end portion of the traditional spacer bar with a substantially rectangular cross section and then curling it. The entire processing process is convenient and fast, allowing for efficient mass production. After the above-mentioned sealed-filler-type spacer bar 100 is processed and formed, the contour of the end portion of the sealed-filler-type spacer bar 100 whose body is curved is smaller than the contour of the adjacent traditional spacer bar. In this way, the end portion of the sealed-filler-type spacer bar 100 can be directly inserted into the adjacent traditional empty spacer bar 200, thereby achieving mutual insertion between the spacer bars. In the entire process of inserting connection of the spacer bars, there is no need to introduce other inserting connectors for connecting the spacer bar, thereby effectively reducing the types of spare parts required for installing the insulating glass unit.

In the above embodiments, the sealed-filler-type spacer bar 100 may be formed by the following processing method: as shown in FIG. 5, the first sidewall 11 of the body is squeezed towards the accommodating cavity to form a concave first groove 111, and the second sidewall 12 of the body is squeezed towards the accommodating cavity to form a concave second groove 121. The first groove 111 and the second groove 121 are located on the tapered section 16. That is, the first groove 111 and the second groove 121 are away from the end face of the body by a certain distance, and the length of the distance is the length of the sheet-like structure 15. By processing the first groove 111 and the second groove 121 in advance, it is possible to prevent, at a later stage, the first sidewall 11 and the second sidewall 12 from extending and protruding outwards due to the squeezing caused by the third sidewall 13 being gradually tilted towards the fourth sidewall 14. As shown in FIG. 5, the third sidewall 13 of the body is pressed down towards the fourth sidewall 14, so that the third sidewall 13 is gradually tilted towards the fourth sidewall 14 until the third sidewall 13 abuts against the fourth sidewall 14, thus forming the tapered section 16. In the above step, the fourth sidewall 14 may also be pressed down towards the third sidewall 13, so that the fourth sidewall 14 is gradually tilted towards the third sidewall 13. The degree to which the fourth sidewall 14 is tilted towards the third sidewall 13 is much smaller than the degree to which the third sidewall 13 is gradually tilted towards the fourth sidewall 14, such that the third sidewall 13 abuts against the fourth sidewall 14 at a position lower than the height of the third sidewall 13 at the non-end portion and slightly higher than the height of the fourth sidewall 14 at the non-end portion, so as to ensure that there is sufficient space for the later curling of the sheet-like structure 15, which can be curled into a curved shape and then can be inserted into other spacer bars. As shown in FIG. 5, the third sidewall 13 and the fourth sidewall 14 at the end portion of the body are flattened in a direction perpendicular to the third sidewall 13 to form the planar sheet-like structure 15. In the above step, the third sidewall 13 and the fourth sidewall 14 in an area in which the tapered section 16 is close to a side of the end portion are flattened in a direction perpendicular to the third sidewall 13 to form the planar sheet-like structure 15. Before the flattening process, the first sidewall 11 in the above area may be bent outwards slightly along its center line, so that the inner wall of the part of the first sidewall 11 below the center line is tightly adhered with the inner wall of the part of the first sidewall 11 above the center line during the flattening process. Before the flattening process, the second sidewall 12 can be bent outwards slightly along its center line, so that the inner wall of the part of the second sidewall 12 below the center line is tightly adhered with the inner wall of the part of the second sidewall 12 above the center line during the flattening process. In the above step, if i the sheet-like structure 15 needs to be sealed, a small amount of adhesive can be filled inside the end portion of the body before flattening it to form the sheet-like structure 15, and after the end portion of the body is flattened, the adhesive diffuses to seal the interior of the sheet-like structure 15. Alternatively, after the sheet-like structure 15 is formed, the end face (i.e. the flattened part) of the sheet-like structure 15 can be sealed by welding. As shown in FIG. 5, the two ends of the sheet-like structure 15 in the direction of the first sidewall 11 and the second sidewall 12 are curled respectively around the axis into the curved shape. In this step, the two ends of the sheet-like structure 15 located in the direction of the first sidewall 11 and the second sidewall 12 can be clamped and then curled around the axis of the body by a mechanical automation equipment, so as to make the two ends of the sheet-like structure 15 in a curved shape. In this way, the maximum width of the contour of the curved sheet-like structure 15 in the direction perpendicular to the first sidewall 11 is smaller than the distance between an inner side surface of the first sidewall 11 and an inner side surface of the second sidewall 12 of the body at the non-end portion of the body, and the maximum height of the contour of the curved sheet-like structure 15 in the direction perpendicular to the third sidewall 13 is smaller than the distance between the inner side surface of the third sidewall 13 and an inner side surface of the fourth sidewall 14 of the body at the non-end portion of the body. Finally, the end portion of the sealed-filler-type spacer bar 100 can be inserted into other spacer bars.

Through the above processing process, it is possible to process an ordinary conventional spacer bar without a sheet-like structure 15 and a tapered section 16 into the present sealed-filler-type spacer bar 100. The entire process only requires the way of mechanical squeezing, without the need for other processing methods. The processing is simple, environmentally friendly, and clean. The sealed-filler-type spacer bar 100 can be completed entirely through automated processing, greatly improving processing efficiency and reducing production costs. In addition, the sealed-filler-type spacer bar 100 can be directly connected together with the empty spacer bar 200 (i.e., a spacer bar without a sheet-like structure 15 and a tapered section 16) by inserting connection, so as to form the spacer bar frame in the insulating glass unit. The spacer bar frame can directly form a closed ring to keep the gas in the insulating glass unit dry. The entire spacer bar frame avoids the use of inserting connectors and uses spacer bars, which reduces labor costs and auxiliary material damage, greatly saving costs.

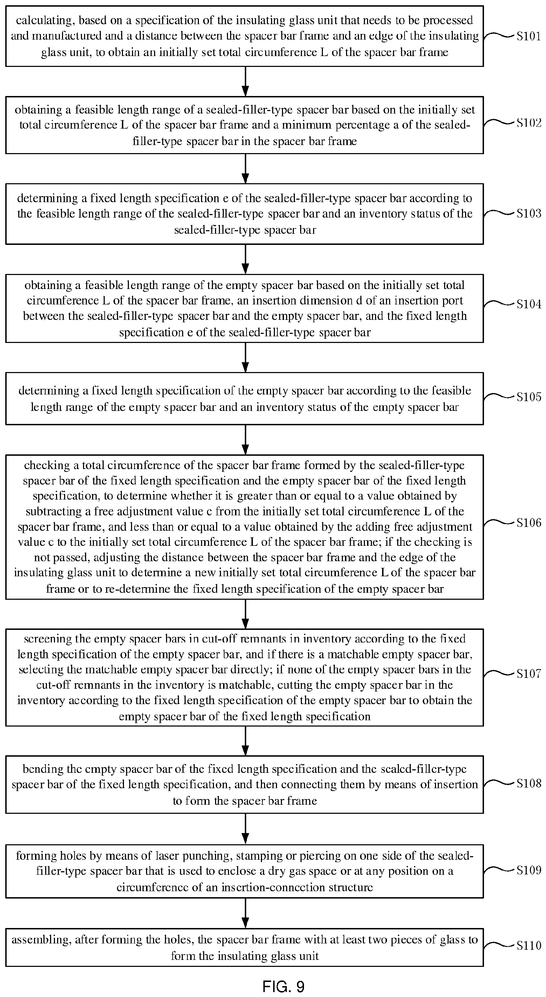

FIG. 9 is a flowchart of the steps of a method for producing an insulating glass unit spacer bar frame in the embodiments of the present disclosure. As shown in FIG. 9, the method for producing an insulating glass unit spacer bar frame in the present application may include:
Before processing and manufacturing the insulating glass unit, an analysis should be conducted based on the specification of the insulating glass unit and a distance between the spacer bar frame and the edge of the insulating glass unit, to determine appropriate dimensions for the sealed-filler-type spacer bar and the empty spacer bar in the spacer bar frame. By doing so, it allows for optimized selection or cutting of the empty spacer bar 200 and the sealed-filler-type spacer bar 100 from inventory. The goal is to minimize or eliminate remnants after cutting the whole empty spacer bar 200, thereby saving production costs, improving production efficiency, and reducing labor intensity. The above-mentioned spacer bar frame can be used in the method for producing an insulating glass unit spacer bar frame.

Step S101: calculating, based on a specification of the insulating glass unit that needs to be processed and manufactured and a distance between the spacer bar frame and an edge of the insulating glass unit, to obtain an initially set total circumference L of the spacer bar frame.

Before processing and manufacturing the insulating glass unit, an initially set total circumference L of the spacer bar frame is calculated based on the specification of the insulating glass unit to be processed and manufactured and a distance between the spacer bar frame and an edge of the insulating glass unit. The initially set total circumference L of the spacer bar frame is a circumferential length formed by offsetting the edge of the insulating glass unit toward its center by a distance between the spacer bar frame and the edge of the insulating glass unit. The distance between the spacer bar frame and the edge of the insulating glass unit may vary at different positions along the edge, depending on actual requirements.

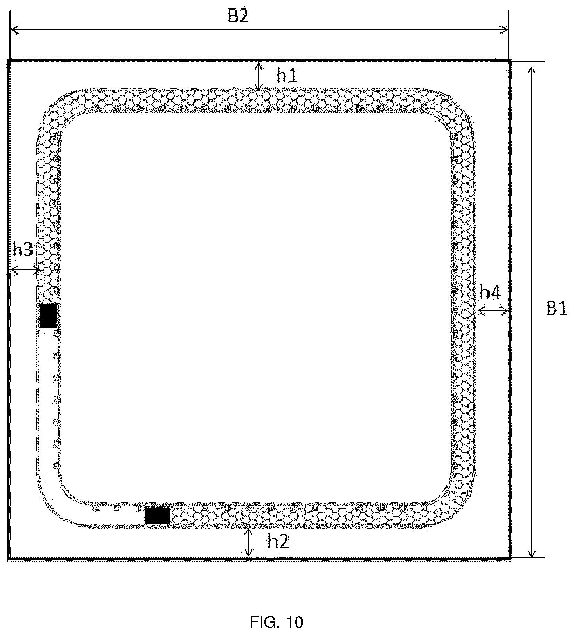

Taking the most common rectangular insulating glass unit as an example, FIG. 10 is a schematic diagram illustrating the relationship between the total circumference L of the spacer bar frame and the glass according to embodiments of the present disclosure. As shown in FIG. 10, the initially set total circumference L of the spacer bar frame is calculated using the formula: L=[2(B1-h1-h2) + 2(B2-h3-h4)] ×M, where M represents a correction coefficient, typically with a value between 0.8 and 1.2.

After the initially set total circumference L of the spacer bar frame is calculated, the next step may be to determine whether the automated bending machine used for bending the sealed-filler-type spacer bar and the empty spacer bar is able to process the spacer bar frame with the initially set total circumference L. The automated bending machine is capable of processing spacer bar frame with a total circumference ranging from a minimum total circumference S1 to maximum total circumference S2. If the initially set total circumference L of the spacer bar frame is smaller than or equal to the maximum total circumference S2 and greater than or equal to the minimum total circumference S1, the initially set total circumference L of the spacer bar frame meets the requirement. If the initially set total circumference L of the spacer bar frame does not meet the requirement, the distance between the spacer bar frame and the edge of the insulating glass unit needs to be adjusted within a feasible range; if it still does not meet the requirement after adjustment, this indicates that the specification of the insulating glass unit is too large or too small for the automated bending machine to process.

Step S102: obtaining a feasible length range of a sealed-filler-type spacer bar 100 based on the initially set total circumference L of the spacer bar frame and a minimum percentage a of the sealed-filler-type spacer bar 100 in the spacer bar frame.

In the above step of obtaining the feasible length range of the sealed-filler-type spacer bar 100 based on the initially set total circumference L of the spacer bar frame and a minimum percentage a of the sealed-filler-type spacer bar 100 in the spacer bar frame, the feasible length range of the sealed-filler-type spacer bar 100 may specifically be greater than or equal to the value obtained by multiplying the initially set total circumference L by the minimum percentage a of the sealed-filler-type spacer bar 100. Feasibly, the minimum percentage a of the sealed-filler-type spacer bar 100 may be may be no less than 70%, thereby effectively ensuring the dryness of the enclosed area formed by the spacer bar frame in the insulating glass unit.

Step S103: determining a fixed length specification of the sealed-filler-type spacer bar 100 according to the feasible length range of the sealed-filler-type spacer bar 100 and an inventory status of the sealed-filler-type spacer bar 100.

After the feasible length range of the sealed-filler-type spacer bar 100 is obtained, the specific selection of the sealed-filler-type spacer bar 100 is made based on the remaining stock of different lengths of the sealed-filler-type spacer bar 100 available in the factory's inventory, so as to determine the fixed length specification of the sealed-filler-type spacer bar 100 for processing the insulating glass unit in this order. Of course, if a plurality of insulating glass units of the same specification need to be processed, the quantity of the determined fixed length specification of the sealed-filler-type spacer bar 100 can meet the usage of all insulating glass units of the same specification.

Step S104: obtaining a feasible length range of the empty spacer bar 200 based on the initially set total circumference L of the spacer bar frame, an insertion dimension of an insertion port between the sealed-filler-type spacer bar 100 and the empty spacer bar 200, and the fixed length specification e of the sealed-filler-type spacer bar 100.

In the above step, the feasible length range of the empty spacer bar 200 is calculated based on the initially set total circumference L of the spacer bar frame, the insertion dimension d of the insertion port between the sealed-filler-type spacer bar 100 and the empty spacer bar 200, and the fixed length specification of the sealed-filler-type spacer bar 100 by the following formula:
the feasible length range of the empty spacer bar ≤ L - e + 2d;
where the insertion dimension d of the insertion port between the sealed-filler-type spacer bar 100 and the empty spacer bar 200 specifically refers to the length by which the sealed-filler-type spacer bar 100 and the empty spacer bar 200 overlap at the inserting connection position.

Step S105: determining a fixed length specification of the empty spacer bar 200 according to the feasible length range of the empty spacer bar 200 and an inventory status of the empty spacer bar 200.

After the feasible length range of the empty spacer bar 200 is obtained, the specific selection of the empty spacer bar 200 is made based on the remaining stock of different lengths of the empty spacer bar 200 available in the factory's inventory, so as to determine the fixed length specification of the empty spacer bar 200 for processing the insulating glass unit in this order. Generally speaking, the inventory is divided into two categories, one of which is the inventory of cut-off remnants, i.e., the leftover materials after cutting the empty spacer bar 200; the other of which is the inventory of new stock, i.e., the empty spacer bar that is not cut and has a long length. Firstly, the empty spacer bar in the inventory of cut-off remnants may be screened according to the fixed length specification of the empty spacer bar. If there is a matchable empty spacer bar in the inventory of cut-off remnants, it should be directly selected for use as the fixed length specification of the empty spacer bar 200. If there is no matchable empty spacer bar in the inventory of cut-off remnants, since the empty spacer bar 200 can be directly cut and used in conjunction with the sealed-filler-type spacer bar without additional processing, an appropriate length should be selected from the empty spacer bar 200 of different lengths available in the inventory, and then one or more empty spacer bars of the fixed length specification can be directly cut from the selected empty spacer bar 200, minimizing or eliminating waste from the remaining unusable portion after cutting. The empty spacer bars 200 of different lengths may be new stock, or cut-off remnants with long length.

For example, the feasible length range of the empty spacer bar 200 is less than or equal to 20 cm; and the inventory status of the empty spacer bar 200 is that the empty spacer bars 200 in the factory's inventory have different lengths of 90 cm, 100 cm, 110 cm, and so on. If a plurality of insulating glass units of the same specification need to be processed, it may be determined that the fixed length specification of the empty spacer bar 200 is 20 cm, and an entire empty spacer bar with a length of 100 cm is selected from the factory's inventory for being cut into 5 sections, each 20 cm long, with no leftover material after cutting. Alternatively, it may be determined that the fixed length specification of the empty spacer bar 200 is 18 cm, and an entire empty spacer bar with a length of 90 cm is selected from the factory's inventory for being cut into 5 sections, each 18 cm long, with no leftover material after cutting. Of course, if dividing the length of the matchable long entire empty spacer bar in the factory's inventory by the determined fixed length specification of the empty spacer bar 200 does not result in an integer, a combination that produces the smallest remainder should be selected, so as to minimize the length of unusable material remaining after cutting. Of course, a new empty spacer bar may be selected and cut again in accordance with the fixed length specification. In processing factories, there are various specifications of the insulating glass unit, and a new empty spacer bar can be cut into empty spacer bars of different lengths to adapt to insulating glass units of different specifications, thereby minimizing the remaining length of the the empty spacer bar after cutting and typically ensuring no waste material, and maximizing the utilization rate of the entire new empty spacer bar. Since the length of the empty spacer bar 200 falls within a specified value range and can be adopted at any value within this range, it offers strong adaptability and large tolerance, and most cut-off remnants can be fully utilized.

Of course, the quantity of the determined fixed length specifications of the empty spacer bar 200 can meet the usage of the entire order.

Step S106: checking a total circumference of the spacer bar frame formed by the sealed-filler-type spacer bar of the fixed length specification and the empty spacer bar 200 of the fixed length specification.

In the above step, the total circumference of the spacer bar frame formed by the sealed-filler-type spacer bar of the fixed length specification and the empty spacer bar 200 of the fixed length specification is made to be greater than or equal to a value obtained by subtracting a free adjustment value c from the initially set total circumference L of the spacer bar frame, and less than or equal to a value obtained by adding the free adjustment value c to the initially set total circumference L of the spacer bar frame. The free adjustment value c is generally within the range of 0 to 30 mm.

If the checking is not passed, the initially set total circumference L of the spacer bar frame is re-determined, and then the fixed length specification e of the sealed-filler-type spacer bar 100 and the fixed length specification of the empty spacer bar 200 are re-calculated and reselected according to the above steps. The initially set total circumference L of the spacer bar frame may be re-determined by adjusting the distance between the spacer bar frame and the edge of the insulating glass unit within a feasible range, so that the initially set total circumference L of the spacer bar frame can be fine adjusted.

Alternatively, if the checking is not passed, it may be possible to re-determine only the fixed length specification of the empty spacer bar. Previously, the empty spacer bar that can be directly matched and does not need to be cut may be selected from the inventory of cut-off remnants as the fixed length specification. Now a new fixed length specification that is obtained by cutting the empty spacer bar in cut-off remnants or new stock may be selected, so as to pass the subsequent checking.

Step S107: screening the empty spacer bars in cut-off remnants in inventory according to the fixed length specification of the empty spacer bar 200, and if there is a matchable empty spacer bar, selecting the matchable empty spacer bar directly; if none of the empty spacer bars 200 in the cut-off remnants in the inventory is matchable, cutting the empty spacer bar in the inventory according to the fixed length specification of the empty spacer bar to obtain the empty spacer bar 200 of the fixed length specification.

After the checking is passed, the empty spacer bars in cut-off remnants in the inventory are screened according to the fixed length specification of the empty spacer bar 200, and if there is a matchable empty spacer bar, the matchable empty spacer bar is selected directly, that is, if the length of an empty spacer bar can directly meet the value range of the fixed length specification, the empty spacer bar can be directly selected for use. If none of the empty spacer bars 200 in cut-off remnants in the inventory can match, the empty spacer bars in the inventory is cut according to the fixed length specification of the empty spacer bar to obtain the empty spacer bar 200 of the fixed length specification, which ensures that the length of waste material remaining after cutting the entire empty spacer bar 200 is minimized or virtually eliminated. The above cut empty spacer bar may be a new stock, or a cut-off remnant with a long length.

Step S108: bending the empty spacer bar 200 of the fixed length specification and the sealed-filler-type spacer bar 100 of the fixed length specification, and then connecting them by means of insertion to form the spacer bar frame.

In the above step, as shown in FIG. 1 and FIG. 2, the sealed-filler-type spacer bar 100 of a fixed length specification can be bent multiple times by an automated bending machine, and the empty spacer bar 200 of a fixed length specification that is directly selected or cut can be bent once or not bent by the automated bending machine, and then they are connected by means of insertion to form the spacer bar frame. For example, the sealed-filler-type spacer bar 100 has a first end and a second end that are opposite to each other, and the first end and the second end each have an insertion-connection structure 1002; the empty spacer bar 200 has a third end and a fourth end that are opposite to each other. The first end is inserted into the third end, and the second end is inserted into the fourth end, to form the spacer bar frame. The sealed-filler-type spacer bar 100 is a spacer bar that has been filled with desiccants 1003 in advance.

In the above step, feasibly, after the empty spacer bar 200 of the fixed length specification and the sealed-filler-type spacer bar 100 of the fixed length specification are bent, the distance X between the end portion of the sealed-filler-type spacer bar 100 of the fixed length specification and a bending point nearest thereto is greater than or equal to a preset distance S, and the distance Y between the end portion of the empty spacer bar 200 and a bending point nearest thereto is greater than or equal to the preset distance S. In this way, it can be ensured that the insertion connection part between the empty spacer bar 200 and the sealed-filler-type spacer bar 100 is firm and stable, preventing the bending area from being too close to the insertion connection part, which could otherwise compromise the stability and strength of the connection part. The preset distance S should generally be no less than 20 mm.

Step S109: forming holes 1001 by means of laser punching, stamping or piercing on one side of the sealed-filler-type spacer bar 100 that is used to enclose a dry gas space or at any position on a circumference of the insertion-connection structure.

When the sealed-filler-type spacer bar 100 forms the spacer bar frame and is to be installed between two pieces of glass, as shown in FIG. 1 and FIG. 2, the holes 1001 are formed on one side of the sealed-filler-type spacer bar 100 that encloses a dry gas space or at any position on the circumference of the insertion-connection structure. Since there is always a certain gap between the insertion-connection structure and the empty spacer bar 200, the holes 1001 on the insertion-connection structure can communicate with the dry gas space through this gap. This ensures that the sealed-filler-type spacer bar 100 can function effectively for dehumidification and drying after it is installed between two pieces of glass. Before forming the spacer bar frame and before being installed between two pieces of glasses, the sealed-filler-type spacer bar 100 has a sealed sidewall without holes 1001, which ensure that the desiccants 1003 pre-filled inside the sealed-filler-type spacer bar 100 remains effective, and avoids the necessity of filling the sealed-filler-type spacer bar 100 with desiccants 1003 when the sealed-filler-type spacer bar 100 is installed between two pieces of glass, which could otherwise lead to contamination of the glass during the filling process.

In the above implementation process, the holes 1001 can be processed efficiently by means of laser punching, stamping or piercing. Exemplarily, the holes 1001 are formed by means of laser punching, which significantly improves processing efficiency while ensuring the quality of the holes 1001.

Feasibly, the side of the empty spacer bar 100 that encloses the dry gas space may be provided with or not provided with the holes 1001.

Step S110: after forming the holes 1001, assembling the spacer bar frame with at least two pieces of glass to form the insulating glass unit.

In the above step, the spacer bar frame is sandwiched between two pieces of glass, or a plurality of spacer bar frames may be sandwiched between a plurality of pieces of glass to form the insulating glass unit. The end surface of the spacer bar frame that is in contact with the glass may be bonded with an adhesive to ensure the sealing effect.

In the present application, by analyzing the specification of the to-be-processed insulating glass unit, it is possible to obtain the fixed length specification of the sealed-filler-type spacer bar 100 filled with desiccants 1003 and the fixed length specification of the empty spacer bar 200 not filled with desiccant 1003, so as to obtain the optimal assembly scheme. The sealed-filler-type spacer bar 100 and/or the empty spacer bar 200 are bent and then inserted with each other to form the spacer bar frame. The whole process is convenient and flexible, and can effectively make full use of the cut-off remnants of the empty spacer bar 200, or minimize the unused part of the whole empty spacer bar 200 after cutting or do not produce leftovers, thus saving production costs and eliminating the inserting connectors used in the traditional process, which can also reduce production costs and reduce labor intensity.

The present application has the characteristics of high flexibility, making it applicable to the processing of the insulating glass unit with many dimensions and specifications. The sealed-filler-type spacer bar 100 come pre-filled with sealing desiccants 1003, eliminating the process of filling the desiccants 1003 during the formation of the insulating glass unit, avoiding the pollution of dust of the desiccants 1003 on the glass, reducing the exposure time of the desiccants 1003 to the air before the insulating glass unit assembled, and effectively improving the processing quality and service life of the insulating glass unit.

In addition, in the present application, both the sealed-filler-type spacer bar 100 and the empty space bar 200 can be manufactured through automated production processes, and the insertion connection between the two to form the spacer bar frame can also be completed directly by automated machinery, eliminating the need for manual intervention, which not only frees workers from high-intensity and repetitive tasks but also significantly enhances production efficiency and product quality.

The above embodiments are only preferred embodiments of the present disclosure and cannot be used to limit the scope of protection of the present disclosure. Any non-essential changes and substitutions made by those skilled in the art on the basis of the present disclosure are within the scope of protection claimed by the present disclosure.

## Claims

1. An insulating glass unit spacer bar frame, comprising:
a sealed-filler-type spacer bar and an empty spacer bar;
wherein the sealed-filler-type spacer bar has a hollow accommodating cavity filled with desiccants; the sealed-filler-type spacer bar has opposite first and second ends, both of which are in a sealed state and have an insertion-connection structure;
the empty spacer bar has opposite third and fourth ends, both of which are in an open state; and
the first end is inserted into the third end, and the second end is inserted into the fourth end, so that a spacer bar frame is formed through bending.

2. The insulating glass unit spacer bar frame according to claim 1, wherein end portions of the first and second ends of the sealed-filler-type spacer bar are each provided with a stepped portion in a circumferential direction; and
the empty spacer bar has a hollow accommodating cavity, the third and fourth ends of the empty spacer bar are in the open state to allow openings of end portions of the empty spacer bar to be in insertion connection with the end portions of the sealed-filler-type spacer bar, and the end portions of the empty spacer bar abut against the stepped portions of the sealed-filler-type spacer bar.

3. The insulating glass unit spacer bar frame according to claim 2, wherein a cross section of the sealed-filler-type spacer bar is substantially rectangular, and a cross section of the empty spacer bar is substantially rectangular;
the cross section of non-end portion of the sealed-filler-type spacer bar in a radial direction is the same as that of non-end portion of the empty spacer bar in the radial direction;
the stepped portion at the end portion of the sealed-filler-type spacer bar is reduced in the radial direction by a distance equal to a wall thickness of the empty spacer bar; and
the sealed-filler-type spacer bar has a third sidewall and a fourth sidewall that are opposite to each other; at each end portion of the sealed-filler-type spacer bar, the third sidewall has a first guide portion tilted toward a center of the sealed-filler-type spacer bar, and the fourth sidewall has a second guide portion tilted toward the center of the sealed-filler-type spacer bar; and an end portion of the first guide portion abuts against and is parallel to an end portion of the second guide portion for sealing.

4. The insulating glass unit spacer bar frame according to claim 1, wherein the insertion-connection structure comprises: a body having an axis, and having a first sidewall and a second sidewall that are opposite to each other and a third sidewall and a fourth sidewall that are opposite to each other, wherein the first sidewall, the second sidewall, the third sidewall and the fourth sidewall enclose the accommodating cavity; at at least one end portion of the body, the third sidewall and the fourth sidewall are pressed in a direction perpendicular to the third sidewall to form a sheet-like structure; and both ends of the sheet-like structure, which are aligned with the first and second sidewalls, are curled around the axis respectively to form a curved shape.

5. The insulating glass unit spacer bar frame according to claim 4, wherein the sheet-like structure is in a sealed state to seal the end portion of the body that has the sheet-like structure;
the third sidewall and the fourth sidewall are in a parallel state at non-end portion of the body, and a maximum height of the contour of the curved sheet-like structure in a direction perpendicular to the third sidewall is smaller than a distance between an inner side surface of the third sidewall and an inner side surface of the fourth sidewall of the body at the non-end portion of the body;
the first sidewall is parallel to the second sidewall at the non-end portion of the body, and the maximum width of the contour of the curved sheet-like structure in a direction perpendicular to the first sidewall is smaller than a distance between an inner side surface of the first sidewall and an inner side surface of the second sidewall of the body at the non-end portion of the body;
the body has a tapered section close to the sheet-like structure; at the tapered section, the third sidewall is gradually tilted towards the fourth sidewall until the third sidewall abuts against the fourth sidewall to form an abutting portion that is a straight line perpendicular to the third sidewall; at the tapered section, the first sidewall is recessed into the accommodating cavity of the body to form a first groove, and the first groove extends along the axis and extends to the abutting portion; at the tapered section, the second sidewall is recessed into the accommodating cavity of the body to form a second groove, the second groove extends along the axis and extends to the abutting portion; a distance between two opposite sidewalls of the first groove gradually decreases in a direction towards the abutting portion until they come into contact; and a distance between two opposite sidewalls of the second groove gradually decreases in the direction towards the abutting portion until they come into contact; and
at the sheet-like structure, the first sidewall is bent outwards symmetrically about its longitudinal center line, so that an inner side surface of a portion of the first sidewall below the longitudinal center line is tightly adhered with an inner side surface of a portion of the first sidewall above the longitudinal center line; and the second sidewall is bent outwards symmetrically about its longitudinal center line, so that an inner side surface of a portion of the second sidewall below the longitudinal center line is tightly adhered with an inner side surface of a portion of the second sidewall above the longitudinal center line.

6. A method for producing an insulating glass unit spacer bar frame, comprising:
calculating, based on a specification of the insulating glass unit that needs to be processed and manufactured and a distance between the spacer bar frame and an edge of the insulating glass unit, to obtain an initially set total circumference L of the spacer bar frame;
obtaining a feasible length range of a sealed-filler-type spacer bar based on the initially set total circumference L of the spacer bar frame and a minimum percentage a of the sealed-filler-type spacer bar in the spacer bar frame;
determining a fixed length specification e of the sealed-filler-type spacer bar according to the feasible length range of the sealed-filler-type spacer bar and an inventory status of the sealed-filler-type spacer bar;
obtaining a feasible length range of the empty spacer bar based on the initially set total circumference L of the spacer bar frame, an insertion dimension d of an insertion port between the sealed-filler-type spacer bar and the empty spacer bar, and the fixed length specification e of the sealed-filler-type spacer bar;
determining a fixed length specification of the empty spacer bar according to the feasible length range of the empty spacer bar and an inventory status of the empty spacer bar; and
checking a total circumference of the spacer bar frame formed by the sealed-filler-type spacer bar of the fixed length specification and the empty spacer bar of the fixed length specification, to determine whether it is greater than or equal to a value obtained by subtracting a free adjustment value c from the initially set total circumference L of the spacer bar frame, and less than or equal to a value obtained by the adding free adjustment value c to the initially set total circumference L of the spacer bar frame; if the checking is not passed, adjusting the distance between the spacer bar frame and the edge of the insulating glass unit to determine a new initially set total circumference L of the spacer bar frame or to re-determine the fixed length specification of the empty spacer bar.

7. The method for producing an insulating glass unit spacer bar frame according to claim 6, further comprising:
screening the empty spacer bars in cut-off remnants in inventory according to the fixed length specification of the empty spacer bar, and if there is a matchable empty spacer bar, selecting the matchable empty spacer bar directly; if none of the empty spacer bars in the cut-off remnants in the inventory is matchable, cutting the empty spacer bar in the inventory according to the fixed length specification of the empty spacer bar to obtain the empty spacer bar of the fixed length specification; and
bending the empty spacer bar of the fixed length specification and the sealed-filler-type spacer bar of the fixed length specification, and then connecting them by means of insertion to form the spacer bar frame.

8. The method for producing an insulating glass unit spacer bar frame according to claim 7, further comprising:
forming holes by means of laser punching, stamping or piercing on one side of the sealed-filler-type spacer bar that is used to enclose a dry gas space or at any position on a circumference of an insertion-connection structure; and
assembling, after forming the holes, the spacer bar frame with at least two pieces of glass to form the insulating glass unit.

9. The method for producing an insulating glass unit spacer bar frame according to claim 7, wherein after the cut empty spacer bar and the sealed-filler-type spacer bar of the fixed length specification are bent, a distance between the end portion of the sealed-filler-type spacer bar of the fixed length specification and a bending point nearest thereto is greater than or equal to a preset distance S, and a distance between the end portion of the empty spacer bar and a bending point nearest thereto is greater than or equal to the preset distance S.
